# EUROPEAN PATENT APPLICATION

(11) **EP 1 610 248 A2**
(43) Date of publication of application: **28.12.2005**
(21) Application number: 05012748.9
(22) Date of filing: 14.06.2005
(51) Int. Cl.: G06F 17/60

(54) **Method and system for managing and issuing personalized commercial offers during the stay in a point of sale**

(30) Priority: 23.06.2004 IT MI20041265
(71) Applicant: Coupon Line S.r.l., 20135 Milano (IT)
(72) Inventor: Cividini, Marcello, 22010 Argegno (Como) (IT); Montangero, Enrico, 20122 Milano (IT)
(74) Representative: Modiano, Micaela Nadia

(57) **Abstract**

A method for managing and issuing personalized commercial offers during the stay in a point of sale, and a system that uses the method. The system comprises at least one system access device (20) connected to a server (13), which in turn is connected to a database (12) that contains an archive of historical data related to users. The server (13) further comprises means (9) for generating an offer that is based on the historical data; the system access devices (20) comprise at least one interface (21) for identifying consumers that is independent of the point of sale where the system access devices are located.

## Description

The present invention relates to a method for managing and issuing personalized commercial offers during the stay in a point of sale, and to a system that uses said method.

In order to market products and provide an incentive to purchase them, a widely used sales policy tool is the association of a particular commercial offer with one or more products. These commercial offers are marketed in many forms, such as for example a combined offer to purchase two products, in which one of the two products is given for free upon purchase of the first one; a price reduction for the simultaneous purchase of multiple units of the same product; the offer of a product at a reduced price if purchased during a specific period, as in the case of a seasonal product if purchased toward the end of its selling season; or also a price reduction and/or the offer of gifts for the repeated purchase of goods at a specific point of sale. For this purpose, so-called "loyalty cards" are used which must be submitted at payment time and allow to benefit from discounts reserved for habitual customers and/or to collect points in order to obtain particular gifts.

Since these commercial offers are aimed at a broad audience, generally composed of buyers having various and often opposite requirements, such as for example quality and low cost, they are mostly leveled at standardized desires, without considering the desires of the individual, thus leaving a segment of consumers dissatisfied or more generally not utilizing efficiently the advantages that these commercial offers can provide. For example, when commercial offers aim to shift demand toward particular products, it is useless for consumers who already buy these products to receive an incentive in this regard. It is instead more effective to give an incentive to such a consumer in a different manner and thus obtain simultaneously two or more positive effects, thus optimizing sales as a whole.

If instead the purpose of the promotion is to increase the loyalty of buyers to the particular point of sale, it is convenient to provide commercial offers that are aimed at purchase items that are particularly appreciated by the individual and therefore, in this case also, are differentiated according to purchase habits or tastes.

An offer that is differentiated according to the requirements of individual consumers has been so far extremely expensive and therefore disadvantageous. For this purpose it is in fact not sufficient to have information that can be accessed easily, such as for example information on the statistical purchasing habits of consumers, but it is necessary to have personalized information, which is generally difficult to obtain and is very expensive to acquire. Moreover, this personalized information is mostly variable over time: for example, the tastes according to which purchases are made can vary spontaneously or can follow contingent trends. This requires a constant processing and updating of the personalized data so that they retain their high informational content and provide true benefits in determining an optimized package of personalized commercial offers. Moreover, a change in the individual information generates the need to update the commercial offers, since if said offers remained based on obsolete information they would no longer be optimized. Such constant updating work of the data and of the offers, therefore, is tied to expensive work, and causes this optimized offer to be disadvantageous as a whole.

Systems are currently known which are meant to generate partially personalized offers, such as for example the generation of purchase vouchers, discount vouchers or other kinds of voucher based on the goods purchased by the individual consumer and therefore aimed, as much as possible, at specific individual needs. The data related to this information are obtained automatically by means of the process of scanning the products during payment of the purchased goods. The generation of these vouchers also occurs automatically by means of a dedicated printing device or, as an alternative, by printing the voucher directly on the back of the receipt.

However, this system suffers drawbacks. First of all, it is based exclusively on data related to a particular purchase; it is unable to utilize historical data, which by means of adequate processing can improve the quality of the resulting commercial offers and thus have a true impact on the purchase choices of consumers. Moreover, these vouchers are generated while paying for the purchased goods, i.e., at the exit of a point of sale, and therefore can be used only on a later occasion. Because of this, often they do not achieve their goal, since they can be lost or forgotten in the period between one purchase and the next, and therefore many consumers do not have the vouchers with them when they could actually be used.

One system capable of offering an archive of historical data and optionally also of generating the vouchers during the stay in the point of sale is based on the use of the already-mentioned "loyalty cards", which allow to identify uniquely a buyer and thus store data related to him.

However, these systems are generally tied to a particular point of sale and to a particular set of logic criteria, according to which the individual commercial offers are prepared. They require substantial work to integrate multiple types of different commercial offers that might be made also by the suppliers or manufacturers of the individual products, and considerable maintenance in order to maintain the enormous number of constantly updated different offers.

Finally, the consumer is forced to carry with him a loyalty card for each point of sale that he visits, in order to benefit from the personalized commercial offers, and nowadays this can be a substantial number and thus causes inconvenience to consumers.

The aim of the present invention is to eliminate the drawbacks noted above in known types of systems for generating personalized commercial offers, by providing a universal system that can be accessed by a user by means of a single device independently of the point of sale.

Within this aim, an object of the present invention is to provide a system that can be updated and accessed simply, optionally even by authorized third parties, allowing to implement multiple forms of commercial offer simultaneously.

Another object of the present invention is to provide a system capable of supplying vouchers that correspond to the personalized commercial offers during the stay of the buyer in the points of sale.

Another object of the present invention is to provide a system that is simple to use and at competitive costs.

This aim and these and other objects that will become better apparent hereinafter are achieved by the system according to the invention, which comprises at least one system access device connected to a central server, which in turn is connected to a database that contains an archive of historical data related to consumers, said server comprising means for generating an offer that is based on said historical data, characterized in that said system access device comprises an interface for identifying consumers that is independent of the point of sale where said system access device is located.

Conveniently, at least one of the interfaces is an interface with the GSM or UMTS mobile communications network or a face recognition device.

Advantageously, the central server is connected to a data communications network, which can be any local network or the Internet.

Further characteristics and advantages of the invention will become better apparent from the description of a preferred but not exclusive embodiment of the system for managing and issuing personalized commercial offers, illustrated by way of non-limiting example in the accompanying drawings, wherein:
Figure 1 is a schematic representation of a preferred but not exclusive embodiment of the system according to the invention;
Figure 2 is a block diagram of the method for managing and issuing personalized commercial offers according to the invention.

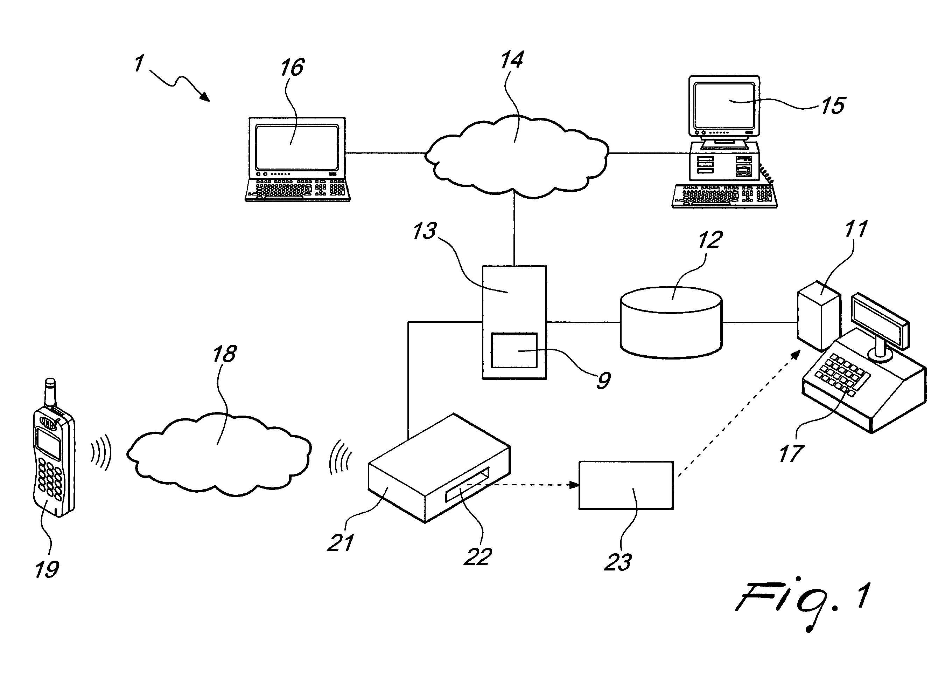

As shown schematically in Figure 1, the system 1 comprises a central server 13, which is connected to a plurality of system access devices 20, which are located in a point of sale, preferably at its entrance. These system access devices 20 are provided with one or more interfaces 21 for identifying the users who wish to access the system. Such an interface 21 can assume various forms. In a preferred but not exclusive embodiment, shown in Figure 1, the interface 21 allows to access a mobile communications network (GSM, UMTS) 18, and identification occurs by means of a cellular telephone 19 owned by the user. These devices are currently widespread among consumers and are generally always carried along, so that access to the system 1 does not require a buyer to bring along, in addition, another type of device.

In another embodiment, the interface 21 can be a digital fingerprint or iris scanning device. In another embodiment, said interface 21 can be any other type of face recognition device or an active RF-ID. The interfaces might also be multiple and of different types within a system access device 20.

In the particular embodiment of Figure 1, the system access devices 20 further comprise printing means (not shown), which are connected to an output 22, which issues the voucher 23, printed by virtue of the printing means, which contains the details of a commercial offer for the buyer identified by means of the interface 21. As an alternative, the vouchers 23 can also assume forms other than paper, depending on the particular embodiment of the system access device 20 that issues them.

For example, they can be sent in the form of electronic pulses directly to the checkout counter 17 where the vouchers 23 are used, or they can be sent as a text message (SMS) to the cellular telephone 19 of the consumer, who must then display it at payment time, or over the data communications network 14 directly to the terminal of the consumer, for example via e-mail. For this purpose, when registering with the system, the consumer who wishes to receive the vouchers 23 on his terminal enters the data required to send them, such as for example his e-mail address.

In order to generate a personalized commercial offer, i.e., an offer that is suitable for the purchasing habits of the identified consumer, the server 13 is connected to a database 12, which contains a historical archive of the data related to commercial offers already used and optionally also related to past purchases made by the specific consumer.

In turn, the database 12 is connected to a plurality of data reading means 11, which are generally associated with a checkout counter 17, since it is at payment time that the data related to products that have been purchased and/or commercial offers that have been used can be collected. These data reading means 11 can comprise, for example, a scanning device for reading, during payment, not only the price but also other data related to the purchased product, such as its make, model and type. Moreover, such means are also capable of reading the data printed on the vouchers 23 related to a particular personalized commercial offer and of extracting therefrom the information related to the identification of the user in order to obtain a unique association of the acquired data.

In the embodiment shown in Figure 1, the data reading means 11, by being connected directly to the database 12, can send the read data automatically. In this case, the updating of the database 12 also occurs automatically and in real time.

In a simpler embodiment, the acquisition of the data related to the vouchers 23, and accordingly the updating of the database 12, can also occur manually.

The central server 13 comprises data processing means 9, which allow, on the basis of the historical data gathered for each consumer and stored in the database 12, to determine the commercial offer that is most suited to the specific buyer. Such data processing means 9 can be accessed via a data communications network 14 (such as the Internet) to which the server 13 is connected. Terminals of various kinds, connected to the network 14, such as a personal computer 15 or a laptop 16, if provided with the appropriate interface software, can access the server 13 and thus access the data processing means 9, thus adapting the parameters for generating the commercial offers to the particular contingent needs of the point of sale.

In a particular embodiment, the data communications network 14 can be a local network of any kind (LAN, PAN, WAN), thus restricting access to the server 13 only to the staff of a specific point of sale. If instead one wishes to have an interaction between the point of sale and the suppliers or manufacturers of the individual products offered at that point of sale, the system 10 can alternately, or additionally, be connected to the Internet 14 and thus allow access also to third parties. In this case, in order to ensure that only authorized personnel accesses the server 13, it is possible to provide various measures already known in the field of security for data exchange over the Internet, such as protection of the data by means of a limited-access entry point (user/password) and protected data transmission via SSL (Secure Socket Layer) or VPN (Virtual Private Network).

Moreover, for organized management of the promotional offers made available, it is possible to implement a hierarchy of levels of access to the server 13, thus allowing only some users to actually vary the configuration of the data processing means 9 on the server 13.

In the case of access via the Internet, the suppliers and manufacturers also are capable of interacting with the system 10, directing the commercial offers related to their products to customers that are truly interesting for them and are not always the customers deemed interesting for the point of sale, which offers a much broader range of products than the individual supplier and the individual manufacturer.

Operation of the system according to the invention is as follows.

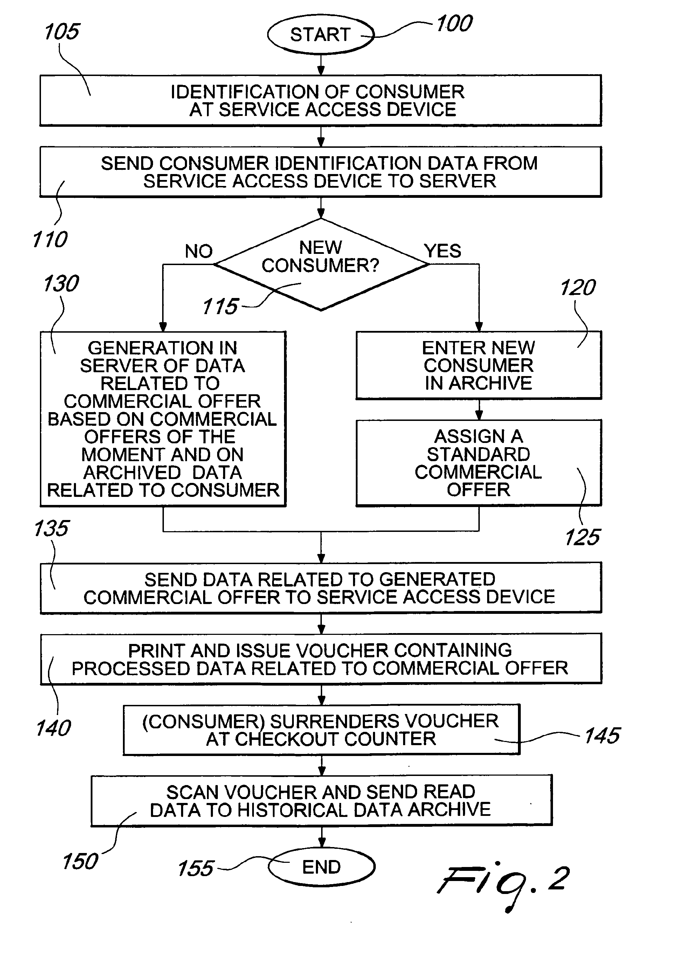

First of all, in step 105 of Figure 2, the consumer is identified at the system access device 20. As discussed earlier, this identification occurs by means of the interface 21. In the case of the embodiment shown in Figure 1, the interface 21 is a GSM, GPRS or UMTS module provided with a SIM card, with which a telephone number is associated. Identification occurs by means of a cellular telephone 19, which by calling the telephone number related to the GSM, GPRS or UMTS module transmits to said module its own number, by means of which the consumer is recognized.

In another embodiment, identification can occur automatically whenever an already-registered consumer accesses the point of sale while carrying his cellular telephone 19 on him. By means of a Cell Broadcasting system, the system 10 is capable of determining automatically which users are in the point of sale and of sending them automatically a text message that contains an identification code by means of which they can collect the voucher 23 from the system access devices 20.

In step 110, the consumer identification data are sent by the system access device 20 to the server 13, where a check is performed (step 115) to determine whether the consumer was already registered with the system 10 or is a new consumer. In this last case, the server 13 automatically enters, in step 120, the new consumer in the database 12 and assigns him a standard welcome commercial offer in step 125.

If the consumer is already registered, in step 130 the optimum commercial offer, based on the historical data related to the identified consumer and stored in the database 12, is generated in the server 13. This generation also depends on the configuration of the data processing means 9, which is updated depending on the particular commercial offers of the moment.

Once the optimum commercial offer has been prepared, the data related to said commercial offer are sent, in step 135, to the system access device 20, which in the subsequent step prints the voucher 23 that contains said data and the identification data of the consumer. Finally, the voucher 23 is expelled through the output 22, so that the consumer can obtain it.

In step 145, the consumer surrenders, when paying for the goods that he wishes to purchase, the voucher 23 to the checkout counter. The voucher is then scanned (step 150) and the corresponding data is read, thus allowing consumer identification. Finally, the data acquired during payment is sent to the archive of the historical data related to the user, so that said archive remains always up-to-date.

In practice it has been found that the system according to the invention fully achieves the intended aim and objects, since it is universal, as it can be accessed by a user via a medium independently of the point of sale in which the system is located.

Moreover, it has been ascertained that the system according to the invention thus described allows simple updating, optionally even by third-party personnel, at the points of sale, concurrently implementing in a single system multiple types of different commercial offers.

Moreover, it has been found that the method according to the invention can provide vouchers that correspond to the personalized commercial offers during the stay of the buyer in the points of sale.

The invention thus conceived is susceptible of numerous modifications and variations, all of which are within the scope of the appended claims.

Thus, for example, the identification for accessing the system can be provided by means of a cellular telephone or by means of face recognition devices. Multiple identification means of different types are also possible.

Moreover, the data communications network for accessing the server can be of any type supported by the devices for updating the means for generating the commercial offers.

It is also evident that the inventive concept on which the present invention is based is independent of the actual implementation of the software modules, which can be provided in any language and on any hardware platform, and likewise the method of integration between the server and the query terminals is non-limiting for the purposes of the invention.

Accordingly, the scope of the protection of the claims must not be limited by the illustrations or by the preferred embodiments presented in the description by way of example, but rather the claims must comprise all the patentable novelty characteristics of the present invention, including all the characteristics that would be treated as equivalent by the person skilled in the art.

The disclosures in Italian Patent Application No. MI2004A001265 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A system for managing and issuing personalized commercial offers in a point of sale, comprising at least one system access device (20) connected to a server (13), which in turn is connected to a database (12) that contains an archive of historical data related to consumers, said server (13) comprising means (9) for generating an offer that is based on said historical data, **characterized in that** said at least one system access device (20) comprises at least one interface (21) for identifying consumers that is independent of the point of sale where said system access device (20) is located.

2. The system for managing and issuing personalized commercial offers in a point of sale according to claim 1, **characterized in that** at least one of said interfaces (21) is an interface with the GSM or UMTS mobile communications network (18).

3. The system for managing and issuing personalized commercial offers in a point of sale according to one of the preceding claims, **characterized in that** at least one of said interfaces (21) is a face recognition device.

4. The system for managing and issuing personalized commercial offers in a point of sale according to one of the preceding claims, **characterized in that** said server (13) is connected to a data communications network (14).

5. The system for managing and issuing personalized commercial offers in a point of sale according to claim 4, **characterized in that** said data communications network (14) is a local network.

6. The system for managing and issuing personalized commercial offers in a point of sale according to claim 4, **characterized in that** said data communications network (14) is the Internet.

7. The system for managing and issuing personalized commercial offers in a point of sale according to one of the preceding claims,
**characterized in that** said means (9) for generating an offer are accessed via said data communications network (14).

8. The system for managing and issuing personalized commercial offers in a point of sale according to one of the preceding claims, **characterized in that** said at least one system access device (20) comprises means for issuing vouchers (23) that contain the details of a commercial offer.

9. The system for managing and issuing personalized commercial offers in a point of sale according to one of the preceding claims, **characterized in that** said at least one system access device (20) is arranged at the entrance of the point of sale.

10. The system for managing and issuing personalized commercial offers in a point of sale according to one of the preceding claims, **characterized in that** said database (12) is connected to data reading means (11).

11. A method for managing and issuing personalized commercial offers in a point of sale, comprising the steps of:
a) identifying a consumer by means of a unique characteristic thereof that is independent of the point of sale where the consumer is located;
b) generating a commercial offer based on historical data related to the identified consumer;
c) issuing a voucher (23) that contains the details of the generated commercial offer;
d) reading data contained in the voucher (23) when it is used and updating the historical data related to the consumer.

12. The method for managing and issuing personalized commercial offers in a point of sale according to claim 11, wherein said characteristic for unique identification of the consumer is the telephone number of the cellular telephone (19) of the consumer.

13. The method for managing and issuing personalized commercial offers in a point of sale according to claim 11, wherein said characteristic for unique identification of the consumer is a facial feature of said consumer.
